# EUROPEAN PATENT APPLICATION

(11) **EP 1 681 543 A1**
(43) Date of publication of application: **19.07.2006**
(21) Application number: 05000472.0
(22) Date of filing: 12.01.2005
(51) Int. Cl.: G01K 17/00

(54) **Apparatus and method for testing heat shield performance**

(71) Applicant: Rieter Technologies A.G., 8406 Winterthur (CH)
(72) Inventor: The designation of the inventor has not yet been filed
(74) Representative: Alder, Hans Rudi

(57) **Abstract**

Apparatus for testing and characterising the insulation performance of thermally loadable materials, in particular heat shields. This apparatus comprises a test chamber (1) and an air duct (2) through which air can flow across the test chamber (1). A fan (8) for generating an airflow through the test chamber (1) is foreseen. Test sample mounting means (3) ensure that a test sample (4) is positioned at a given test sample level within the test chamber (1). A heater (5) below the test sample level is designed such that a vehicles' heat source is simulated. A floor element (6) below the heater is simulating a road surface, while a reference panel (7) above the test sample level is simulating a car body part. A number of temperature sensors (not shown) attached at appropriates points of the test sample (4) and the reference panel (7) are measuring the temperature at these locations.

## Description

The present invention is concerned with an apparatus for testing and characterizing the insulation performance of thermally loadable materials, in particularly heat shields, according to the preamble of claim 1 and with a method according to the preamble of claim 9.

Today's automotive market tends to increase the size of the passenger compartment while reducing the size of the overall vehicle. To accomplish this, the engine comportment size is reduced. This results that the hot exhaust system being closer to temperature-sensitive components. At the same time styling trends are reducing the open area of the grill which reduces the amount of cooling air entering the engine compartment. The reduced cooling increases the underhood air temperatures resulting in higher component temperatures. Furthermore, the hot air from the engine compartment dumps underneath the vehicle resulting in increased underbody air temperatures making it more difficult to cool components near the exhaust system. As a consequence, it becomes increasingly important to actively manage the thermal situation within the engine compartment.

There are two main ways of protecting components from the temperatures of the exhaust system. The first one is to insulate the exhaust system itself while the second one is to put a shield between the exhaust system and the components to be protected. There are many different shield materials and methods of producing such heat shields. Also suppliers are constantly developing new materials and production methods for shields. Consequently, the designer and development engineers need a quick way of knowing the thermal behaviour of a new material. Unfortunately analytical methods are dependent on many input parameters that may not be known for these shields. For fibrous insulation sandwiched between metal layers the amount of radiation and convection through the fibrous is usually unknown. For multi-layer metal insulations the amount of contact resistance is in question and the effect of lateral conduction is difficult to determine. When air gaps are used the internal convection effect is unknown. For all shields the lateral conduction around the shield through a folded joint is difficult to model.

Consequently, many suppliers currently have a homemade test device which they can use to rank their own heat shield materials. Some suppliers test their samples by heating one side of it with an air gun up to 350° C and measure the temperature of the other side of the sample. Thereby, the influence of the sample size and the dominant effects of convection are not considered what leads to unreliable values of the measured temperature decrease and low reproducibility. There is another test method known using a given sample size (400 mm x 400 mm) and using a heat source temperature of 600°C. As well, this method is not reliable since the influences from environment are not considered for the measurement of the temperature decrease. In particular, the effects of lateral conductivity, heat reflection, insulation properties and heat emissivity are not considered.

Because there is no standard test method an outside engineer has no way of comparing shields form different suppliers. Consequently, there is a need to develop a test method for ranking heat shield materials for automotive use which allows to easily compare materials from different sources.

Unfortunately most of the different known test apparatus work without the influence of forced convection (also a generally known test apparatus as described in SAE-51796, SAE-formed heat shield test chamber). These tests only take into account natural convection and usually the test sample is heated until stable conditions are achieved.

An apparatus for testing insulation properties of materials which are suitable for shielding heat produced by one or the other vehicle component is discloses in DE-197'11'687. With this apparatus heated air is vented through a multi-duct test chamber containing a test sample. The temperature distribution of the sample is measured by suitable sensors fixed at the sample and the insulation performance is calculated by computers. Again the generated measurements do not reflect the thermal behaviour of the sample material under realistic conditions and lead to unreliable calculation results.

The arrangements and measurement methods of all the known test apparatus do not reflect real conditions for vehicle applications, since the vehicle at maximum engine load is either climbing a hill with a moderate forced convection, or travels at very high speed with very important forced convection. The thermal behaviour of heat shields in vehicles in general follows a characteristic sequence:
I. starting phase at ambient air temperature value and without any forced air flow (parking conditions);
II. heating phase with constant heating power and forced airflow (driving conditions);
III. heat soaking phase without heating and with unforced, natural airflow (stopped vehicle conditions).

Furthermore, the known test chambers are not reflecting the influence of forced convection in relation with radiation and natural conduction in order to better represent a real vehicle situation. These test chambers are not performing a high sensitivity on different sample types and do not perform a high reproducibility in the range of about 0,5 °K.

It is therefore the aim of present invention to achieve an apparatus which allows to make a standardized measurement based on a standardized geometry (flat samples). Nevertheless the apparatus is designed in a way that the geometrical situation can be changed and allows to rank efficiently heat shields and/or thermally loadable materials. This is important when using the test apparatus for research and development tasks.

A further important aspect of present invention is to achieve an apparatus with very high reproducibility of the tests and having a good sensitivity on the test sample, i.e. allowing a fine ranking of different test samples (heat shields and/or thermally loadable materials).

It is a further goal of present invention to achieve an apparatus which allows to run a test simulating realistic driving conditions, in particular allowing to generate forced and unforced convection on the sample revealed.

These problems are solved by an apparatus comprising the features of present claim 1 and in particular by an apparatus comprising a test chamber, an air duct for allowing air to flow across the test chamber, a fan for generating an air flow through the test chamber, a test sample mounting means for holding a test sample at a test sample level within the test chamber, a heater for simulating a vehicle's heat source below the test sample level, a floor element below the heater for simulating a road surface, a reference panel above the test sample level for simulating a car body part, a number of temperature sensors for measuring the temperatures at appropriate points of the reference panel.

Further preferred embodiments comprise the features of present dependent claims. In particular the apparatus according to the invention further comprises a lower duct platform, which is movable for varying the over all cross section of the air duct. This air duct may further comprise at least a flow straightener at the air flow inlet side and preferably a second flow straightener at the air flow outlet side. In addition the test sample mounting means allows to move the test sample within the test chamber and in particular within the air flow duct. A further preferred embodiment comprises a heater which is movable for varying the distance between test sample level and heater. In particular the heater is cylindrical for simulating an exhaust pipe. Of course the floor element may preferably be aligned with the lower duct platform and the floor element may comprise bricks, a tarmac or paving.

Furthermore the reference panel may be movable for varying the distance between test sample and reference panel.

To run the test in accordance with the invention the sample is mounted and first thermally stabilised at ambient air temperature (stabilization phase). In a second method step the sample is exposed to forced convection and heating until a stable temperature distribution is achieved. In a third method step the forced convection and heating are switched off and the temperature behaviour of the target structure (reference panel) and the test sample are measured under the influence of natural convection.

It is evident for the man skilled in the art that these measurements can be repeated by using different air flow conditions, different temperatures and different distances between all the respective elements.

The present apparatus allows to run a standardized thermal test of materials and multilayer assemblies used in heat shield, acoustic materials and other heat loaded and/or heat loadable components. This apparatus represents a standardized geometrical configuration in a vehicle comprising a heat source, a test sample and a target structure. The heat source can be controlled to generate heat according to a specific test cycle. The distance of the source to the test sample can be adjusted, as well as the distance to the target structure (usually a flat reference panel). The test apparatus comprises a duct system in order to reproduce forced convection during the test cycle. The temperatures on the target structure and on the test samples are measured in order to classify the performance of the sample.

It is a further object of present invention to achieve a test method with high reproducability and sensitivity.

This is achieved by the method according to claim 9 and in particular by a method using the apparatus of claim 1. This method is comprising the following steps:
- starting phase for thermally stabilizing a test sample at an ambient air temperature,
- heating phase for exposing the test sample to a constant heating power and a forced air convection until a stable temperature distribution is achieved,
- soak phase for thermally dying-out of the test sample with switched off heating and under influence of unforced natural convection,
- measuring the temperature behaviour of the test sample and the reference panel during all theses phases and storing the measured data in a data-logger, which data are downloaded for further processing by a PC.

It appears to be important that the used sensors are calibrated, the test sample is sealed against the test device, the bowing of the test sample occurring during the heating and soak phase is controlled and that uncontrolled chimney effects are avoided during the soak phase. Only this guaranties a high reproducability of about 1 °K. Temperature deltas between the temperatures of the reference panel and the insulating heat shield material during the soak phase make the improved sensitivity evident.

In the following, the invention will be described with reference to a preferred embodiment and accompanied figures:
Figure 1: Overview sketch of a testing apparatus in accordance with the invention;
Figure 2: Overview of the temperature behaviour during a test cycle.

In the following Theta (ϑ) is used as symbol for heat transfer to define standardized temperature behaviour. The present apparatus (Rieter Automotive Theta Box) is used for the investigation of the performance of heat shields and thermally loaded materials under conditions simulation vehicle operation. The Theta Box takes all three heat transfer mechanism (conduction, convection and radiation) into account.

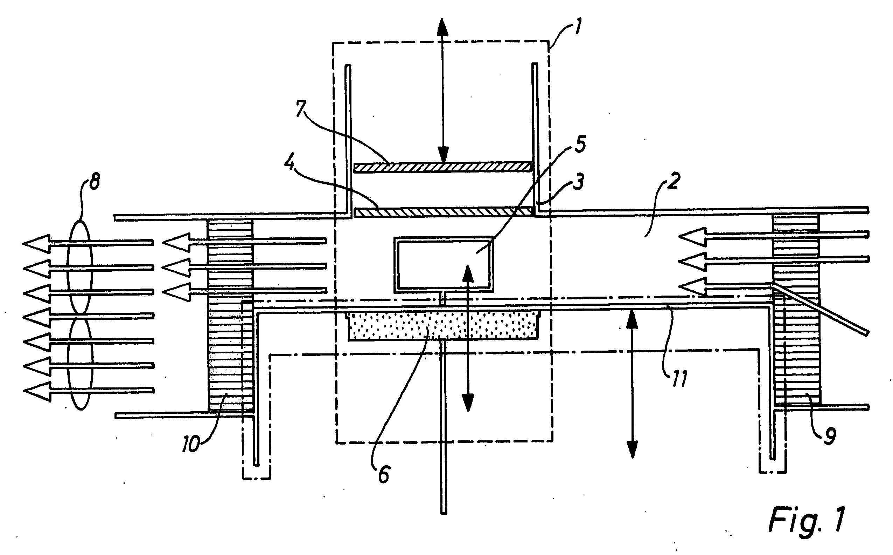

The principal of the apparatus according to the present invention is shown in figure 1. This apparatus comprises a test chamber 1, an air duct 2 for allowing air to flow across the test chamber 1, as well as a test sample mounting means 3 for holding a test sample 4 at a test sample level within the test chamber 1. This apparatus further comprises a heater 5 for simulating a vehicles' heat source below the test sample level. Below the heater 5 a floor element 6 is arranged for simulating a road surface. A reference panel 7 is arranged above the test sample level for simulating a car body part. A number of temperatures senses (not shown) for measuring the temperatures at appropriate points of the reference panel 7 and the test sample 4 is connected with a computer device (not shown). A fan 8 for generating an airflow through the test chamber 1 is arranged within the air duct 2. Preferably airflow straighteners 9, 10 are arranged at the airflow inlet side and at the airflow outlet side of the air duct 2. A lower duct platform 11 is moveable for varying the over all cross section of the air duct 2. In order to allow the test sample 4 to be moved within the test chamber 1 the test sample mounting means 3 are moveably arranged within the test chamber 1. Also the heater 5 is moveably arranged within the test chamber 1 for varying the distance between test sample level and heater 5. Preferably the heater 5 is cylindrical in order to simulate and exhaust pipe. A floor element 6 is aligned with the low duct platform 11 and preferably comprises bricks, a tarmac or paving. In order to achieve realistic conditions the reference panel 7 is moveable in order to vary the distance between the test sample 4 and the reference panel 7. The distance range between the moveable reference panel 7 and the test sample 4 lies between 0 and 100 mm. The range for the distance between heater 5 and test sample 4 varies between 0 and 300 mm while the range for the distance between heater 5 and floor element 6 varies between 300 and 0 mm. The air duct hide can be varied by the moveable duct platform in a range between 150 and 350 mm. It is evident for the man skilled in the art that all these elements can move independently. The airflow can be varied from a stationary airflow up to a velocity of 12 m/s.

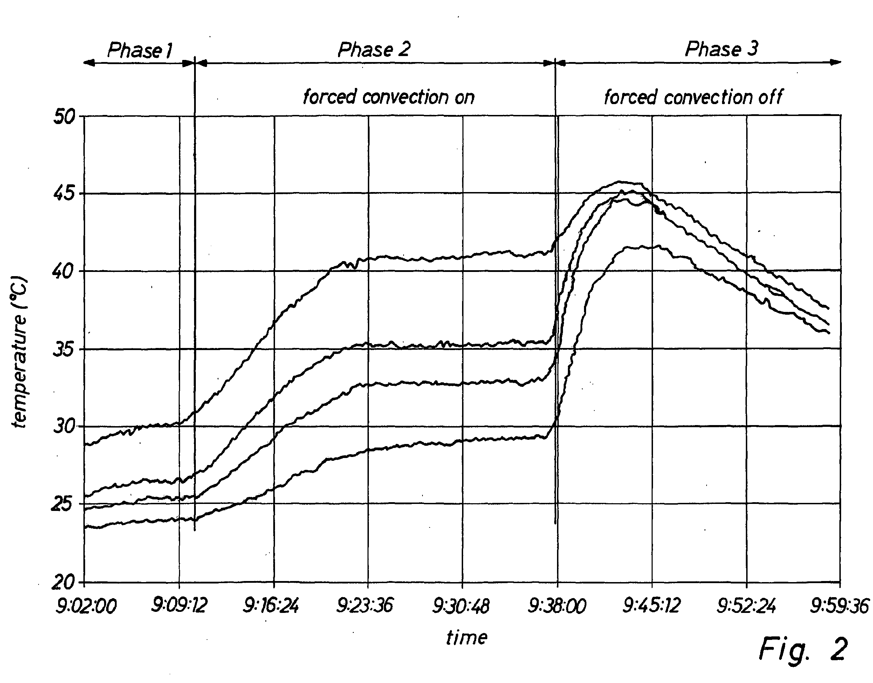

As becomes evident from Figure 2, showing a characteristic temperature sequence, that the mounted test sample 4 is first thermally stabilised at ambient air temperature, i.e. a so called stabilisation phase. In a second method step the sample 4 is exposed to a constant heating power and a forced air convection until a stable temperature distribution is achieved, i.e. a so called heating phase simulating driving conditions. In a third method step the heating and forced convection is stopped, i.e. a so called soak phase. During all theses phases the temperature behaviour of the test sample 3 and the reference panel 7 are measured and stored in a data-logger from which these data may be downloaded for further processing by a PC.

To apply the present method the test sample is mounted in the test chamber between the cylindrical heater (simulating an exhaust pipe) and a referenced panel (simulating a car body part). The floor of the chamber is covered by bricks or paving or tarmac (simulating a road surface). A number of thermo couplers measure the temperatures at appropriate points on the test sample and the reference panel. These measurements can be made under varying conditions of airflow through the chamber from stationary up to 12 m/s and at different distances of respective elements. A typical test simulation cycle comprises a starting phase, a 30-minutes phase with constant heating power and a forced airflow, followed by a stationary heat loading phase (dying out phase) with switched off heating power and unforced convection.

The advantages of present invention are obvious for the man skilled in the art. In particular the test device allows to rank efficiently several heat shields and thermally loaded materials. The reproducibility of the test apparatus is higher than any other known test devices an reached a measuring accuracy of +/- 0.5 °K. The sensitivity of the device on different sample configurations allows a fine tuning of materials in order to optimise costs and performance. The device may be used for the purpose of research and development activities as well as for testing material failures.

The present Theta Box is particularly suitable for the development of Automotive heat shields and for carrying out research in the filed of heat transfer. The apparatus is also suitable for the development of other thermally loaded components, such as thermal plastic parts, dash liners, hood liners, a.s.o. Measurements with the Theta Box are highly reproducible (reproducibility for the same sample is approximately 0.5 °K) and sensitive, since it is possible to discriminate clearly between e.g. heat shields with different treatments and insulation). The Theta Box is therefore widely applicable, showing a high reproducibility and sensitivity, and is related to practical conditions.

## Claims

1. Apparatus for testing and characterizing the insulation performance of thermally loadable materials, in particular heat shields, comprising:
a test chamber (1),
an air duct (2) for allowing air to flow across the test chamber (1),
a fan (8) for generating an air flow through the test chamber (1),
a test sample mounting means (3) for holding a test sample (4) at a test sample level within the test chamber (1),
**characterized in that** the apparatus further comprises:
a heater (5) for simulating a vehicle's heat source below the test sample level,
a floor element (6) below the heater (5) for simulating a road surface,
a reference panel (7) above the test sample level for simulating a car body part,
a number of temperature sensors for measuring the temperature at appropriate points of the test sample (4) and of the reference panel (7).

2. Apparatus according to claim 1, **characterised in that** the air duct (2) comprises a lower duct platform (11), which is movable for varying the over all cross section of the air duct (2).

3. Apparatus according to claim 1, **characterised in that** the air duct (2) comprises at least a flow straightener (9) at the air flow inlet side and preferably a second flow straightener (10) at the air flow outlet side.

4. Apparatus according to claim 1, **characterized in that** the test sample mounting means (3) allows to move the test sample (4) within the test chamber (1) and in particular within the air flow duct (2).

5. Apparatus according to claim 1, **characterized in that** the heater (5) is movable for varying the distance between test sample level and heater (5).

6. Apparatus according to claim 5, **characterized in that** the heater (5) is cylindrical for simulating an exhaust pipe.

7. Apparatus according to claim 1, **characterized in that** the floor element (6) is aligned with the lower duct platform (11).

8. Apparatus according to claim 1, **characterized in that** the floor element (6) comprises bricks, a tarmac or paving.

9. Apparatus according to claim 1, **characterized in that** the reference panel (7) is movable for varying the distance between test sample (4) and reference panel (7).

10. Method for testing and characterizing the insulation performance of thermally loadable materials, in particular heat shields, using the apparatus of claim 1 and comprising the following steps:
- starting phase for thermally stabilizing a test sample at an ambient air temperature,
- heating phase for exposing the test sample to a constant heating power and a forced air convection until a stable temperature distribution is achieved,
- soak phase for thermally dying-out of the test sample with switched off heating and under influence of unforced natural convection,
- measuring the temperature behaviour of the test sample and a reference panel during all theses phases and storing the measured data in a data-logger,
- downloading that data for further processing by a PC to determine heat transfer characteristics.
